(19) Europäisches Patentamt
European Patent Office
Office européen des brevets

(11) **EP 3 878 157 B1**

(12) **EUROPÄISCHE PATENTSCHRIFT**

(45) Veröffentlichungstag und Bekanntmachung des Hinweises auf die Patenterteilung:
**07.08.2024** **Patentblatt 2024/32**

(21) Anmeldenummer: **19821040.3**

(22) Anmeldetag: **04.12.2019**

(51) Internationale Patentklassifikation (IPC):
*H04L 12/66* (2006.01)    *G06N 20/00* (2019.01)
*G06N 3/08* (2023.01)    *G06N 3/04* (2023.01)
*H04L 67/56* (2022.01)    *H04L 67/568* (2022.01)
*H04L 67/5651* (2022.01)    *G06N 3/006* (2023.01)
*H04L 67/00* (2022.01)    *H04L 67/12* (2022.01)
*H04L 67/10* (2022.01)

(52) Gemeinsame Patentklassifikation (CPC):
**G06N 3/006; G06N 3/04; G06N 3/08; H04L 67/56; H04L 67/5651; H04L 67/568;** H04L 67/10; H04L 67/12; H04L 67/34

(86) Internationale Anmeldenummer:
**PCT/EP2019/083616**

(87) Internationale Veröffentlichungsnummer:
**WO 2020/120246 (18.06.2020 Gazette 2020/25)**

(54) **ANPASSEN EINER SOFTWARE-ANWENDUNG, DIE AUF EINEM GATEWAY AUSGEFÜHRT WIRD**

ADJUSTMENT OF A SOFTWARE APPLICATION EXECUTED ON A GATEWAY

AJUSTEMENT D'UNE APPLICATION LOGICIELLE EXÉCUTÉE SUR UNE PASSERELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2018 EP 18211831**

(43) Veröffentlichungstag der Anmeldung:
**15.09.2021 Patentblatt 2021/37**

(73) Patentinhaber: **Siemens Aktiengesellschaft 80333 München (DE)**

(72) Erfinder: **SCHALL, Daniel 2020 Hollabrunn (AT)**

(74) Vertreter: **Siemens Patent Attorneys Postfach 22 16 34 80506 München (DE)**

(56) Entgegenhaltungen:
**US-A1- 2013 122 885**

• **TRAN THE ANH ET AL: "Deep Reinforcement Learning for Time Scheduling in RF-Powered Backscatter Cognitive Radio Networks", ARXIV.ORG, CORNELL UNIVERSITY LIBRARY, 201 OLIN LIBRARY CORNELL UNIVERSITY ITHACA, NY 14853, 3 October 2018 (2018-10-03), XP081059739**

**Beschreibung**

GEBIET DER ERFINDUNG

Die vorliegende Erfindung betrifft ein Verfahren zum Anpassen einer ersten Software-Anwendung, die auf einem Gateway ausgeführt wird und die Datenübertragung des Gateways steuert, wobei das Gateway ein oder mehrere Geräte eines lokalen Netzwerks mit einem Cloud-Netzwerk verbindet.

Die vorliegende Erfindung wird insbesondere im Zusammenhang mit dem sogenannten Internet of Things (IoT) eingesetzt.

STAND DER TECHNIK

Das sogenannte Internet der Dinge (engl. Internet of Things, IoT) umfasst ein Netzwerk von physischen Geräten, wie Sensoren oder Aktuatoren. Die Geräte sind mit Elektronik, Software und einer Netzwerkverbindung versehen, welches diesen Geräten ermöglicht, eine Verbindung herzustellen und Daten auszutauschen. Sogenannte Plattformen ermöglichen es dem Anwender, seine Geräte und physische Daten-Infrastruktur, also sein lokales Netzwerk, mit der digitalen Welt zu verbinden, also mit einem weiteren Netzwerk, in der Regel ein sogenanntes Cloud-Netzwerk.

Das Cloud-Netzwerk kann aus mehreren unterschiedlichen Cloud Plattformen bestehen, welche üblicherweise von verschiedenen Anbietern angeboten werden. Eine Cloud Plattform stellt IT-Infrastruktur, wie beispielsweise Speicherplatz, Rechenleistung oder Anwendungssoftware, als Dienstleistung über das Internet zur Verfügung. Das lokale Netzwerk inklusive lokaler Rechenressourcen wird auch als Edge bezeichnet. Rechenressourcen am Edge sind besonders für die die dezentrale Datenverarbeitung geeignet.

Die Geräte, bzw. deren lokales Netzwerk, sind bzw. ist typischer Weise über sogenannte Gateways mit dem Cloud-Netzwerk verbunden, welches das sogenannte Back-End umfasst und Back-End-Dienste anbietet. Ein Gateway ist eine Hard-und/oder Software-Komponente, welche zwischen zwei Netzwerken eine Verbindung herstellt. Die Daten der Geräte des lokalen Netzwerks sollen nun über das Gateway verlässlich an die Back-End-Dienste des weiteren Netzwerks übertragen werden, wobei dies durch die Schwankungen der Bandbreite des lokalen Netzwerks und Schwankungen der Datengröße und der Übertragungsgeschwindigkeit der Daten erschwert wird. Eine statische Methode zur Datenübertragung vom lokalen Netzwerk über das Gateway in das Cloud-Netzwerk trägt dem normalerweise nicht Rechnung.

Grundsätzlich gibt es verschiedene Methoden, wie die Geräte des IoT miteinander und/oder mit dem Cloud-Netzwerk verbunden sein können: von Gerät zu Gerät (engl. device-to-device), vom Gerät zum Cloud-Netzwerk (engl. device-to-cloud) und vom Gerät zu einem Gateway (engl. device-to-gateway). Die vorliegende Erfindung bezieht sich hauptsächlich auf die Methode, bei der das Gerät mit einem Gateway des lokalen Netzwerks verbunden ist, könnte jedoch auch auf die anderen Methoden angewendet werden.

Bei der Gerät-zum-Gateway Methode verbinden sich ein oder mehrere Geräte über ein Zwischen-Gerät, das Gateway, mit dem Cloud-Netzwerk bzw. den Cloud-Diensten, wie eben den sogenannten Back-End-Diensten. Oft verwendet das Gateway dafür eine eigene Anwendungs-Software. Das Gateway kann zusätzlich auch andere Funktionalitäten bereitstellen, wie eine Sicherheitsanwendung, oder eine Übersetzung von Daten und/oder Protokollen. Die Anwendungs-Software kann eine Anwendung sein, die sich mit dem Gerät des lokalen Netzwerks zusammenschließt (engl. pairing) und die Verbindung mit einem Cloud-Dienst herstellt.

Die Gateways unterstützen meistens eine Vorverarbeitung (engl. preprocessing) der Daten der Geräte, was in der Regel eine Aggregation oder Kompression von Daten beinhaltet sowie ein Zwischenspeichern (engl. buffering) der Daten, um Unterbrechungen der Verbindung zu den Back-End-Diensten begegnen zu können. Das Bewältigen von komplexen Arbeitszuständen am Gateway, wie Übertragung von unterschiedlichen Datenarten bei Batch-Übertragung von Dateien oder die Übertragung von zeitlich kritischen Daten, und von zufälligen Schwankungen des lokalen Netzwerks werden derzeit noch nicht gut unterstützt.

Es gibt Konzepte auf Ebene des Netzwerks, die Übertragungsqualität (engl. qualitiy of service, QoS) des Netzwerks zu verbessern. Allerdings arbeiten diese QoS Konzepte eben auf Netzwerkebene und nicht auf der Ebene von Software-Anwendungen. Dadurch kann nicht auf die Bedürfnisse der Software-Anwendungen eingegangen werden.

US 2013/122885 A1 offenbart ein System, in dem eine Basisstation mittels bestätigenden Lernens Funknetzparameter wie z.B. Interzellinterferenz oder Ressourcenzuteilung optimiert.

In TRAN THE ANH ET AL: "Deep Reinforcement Learning for Time Scheduling in RF-Powered Backscatter Cognitive Radio Networks",ARXIV.ORG, CORNELL UNIVERSITY LIBRARY, 201 OLIN LIBRARY CORNELL UNIVERSITY ITHACA, NY 14853, 3. Oktober 2018, wird maschinelles Lernen zur Optimierung eines Funknetzes, insbesondere eines RF-betriebenen Backscatter Cognitive Radio Networks, offenbart.

DARSTELLUNG DER ERFINDUNG

Es ist somit eine Aufgabe der Erfindung, ein Verfahren anzugeben, mit welchem Anwendungen zur Datenübertragung, die auf einem Gateway ausgeführt werden, ihr Verhalten anpassen können.

Diese Aufgabe wird durch ein Verfahren nach Anspruch 1 gelöst. Anspruch 1 betrifft ein Verfahren zum Anpassen einer ersten Software-Anwendung, die auf einem Gateway ausgeführt wird und die Datenübertragung des Gateways steuert, wobei das Gateway ein oder mehrere Geräte eines lokalen Netzwerks mit einem Cloud-Netzwerk verbindet. Dabei ist vorgesehen,

- dass mittels einer zweiten Software-Anwendung maschinelles Lernen auf Basis von zumindest einem Zustand der Umgebung des Gateways sowie von zumindest einer möglichen Aktion des Gateways durchgeführt wird,
- dass das Ergebnis des maschinellen Lernens zumindest ein Qualitätswert einer Paarung aus Zustand der Umgebung des Gateways und Aktion des Gateways enthält, und
- dass die erste Software-Anwendung solche Aktionen des Gateways ausführt, welche bei einem gegebenen Zustand der Umgebung des Gateways einen höheren Qualitätswert haben als andere Aktionen.

Die Erfindung sieht also maschinelles Lernen zur Steuerung einer Gateway-Funktion vor.

Die Erfindung sieht vor, dass die zweite Software-Anwendung ein Verfahren zum bestätigenden Lernen umfasst, wobei für jede Paarung aus Zustand der Umgebung des Gateways und Aktion des Gateways eine Rückmeldung in Form einer Belohnung erfolgt.

Bestärkendes Lernen, das auch als verstärkendes Lernen bezeichnet wird (engl. reinforcement learning, RL), steht für eine Reihe von Methoden des maschinellen Lernens, bei denen ein Agent selbständig eine Strategie erlernt, um erhaltene Belohnungen zu maximieren. Dabei wird dem Agenten nicht vorgezeigt, welche Aktion in welcher Situation die beste ist, sondern er erhält zu bestimmten Zeitpunkten eine Belohnung, die auch negativ sein kann. Anhand dieser Belohnungen approximiert er eine Nutzenfunktion, hier eine Qualitätsfunktion (bzw. Qualitätswerte), die beschreibt, welchen Wert ein bestimmter Zustand oder eine bestimmte Aktion hat.

Insbesondere kann vorgesehen sein, dass die zweite Software-Anwendung ein Verfahren zum Q-Lernen umfasst.

In einer Ausführungsform der Erfindung ist vorgesehen, dass die Daten über den Zustand der Umgebung des Gateways vor dem bestätigenden Lernen zu Clustern zusammengefasst werden. Dadurch kann das bestätigende Lernen vereinfacht werden.

In einer Ausführungsform der Erfindung ist vorgesehen, dass das Q-Lernen mit Hilfe eines Modells erfolgt, welches auf einer Cloud Plattform im Cloud-Netzwerk mit den aktuellen Daten des Zustands der Umgebung des Gateways trainiert wird, und ein trainiertes Modell dem Gateway bei Bedarf zur Verfügung gestellt wird. Dadurch wird das Gateway nicht zusätzlich mit den Berechnungen für das Q-Lernen belastet.

Das Modell kann ein neuronales Netzwerk umfassen, dessen Lerneigenschaften, wie Lerngeschwindigkeit, gut über Parameter definiert werden können.

Eine Ausführungsform der Erfindung besteht darin, dass die erste Software-Anwendung eine erste Steuerung umfasst, welche das Ergebnis des maschinellen Lernens nicht berücksichtigt, sowie eine zweite Steuerung, welche das Ergebnis des maschinellen Lernens berücksichtigt, wobei die zweite Steuerung eingesetzt wird, sobald Qualitätswerte aus dem maschinellen Lernen vorliegen, insbesondere sobald ein trainiertes Modell, wie oben beschrieben, vorliegt.

Da das erfindungsgemäße Verfahren auf bzw. mit einem oder mehreren Computern ausgeführt wird, umfasst die Erfindung auch ein entsprechendes Computerprogrammprodukt, welches wiederum Befehle umfasst, die bei der Ausführung des Programms durch ein Gateway dieses veranlassen, alle Schritte des erfindungsgemäßen Verfahrens auszuführen. Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor eines Computers geladen werden kann.

Das Computerprogramm kann also folgende Schritte veranlassen bzw. selbst durchführen:

- dass mittels einer zweiten Software-Anwendung maschinelles Lernen auf Basis von zumindest einem Zustand der Umgebung des Gateways sowie von zumindest einer möglichen Aktion des Gateways durchgeführt wird,
- dass das Ergebnis des maschinellen Lernens zumindest ein Qualitätswert einer Paarung aus Zustand der Umgebung des Gateways und Aktion des Gateways enthält, und
- dass die erste Software-Anwendung solche Aktionen des Gateways ausführt, welche bei einem gegebenen Zustand der Umgebung des Gateways einen höheren Qualitätswert haben als andere Aktionen.

Wenn die zweite Software-Anwendung nicht auf dem Gateway ausgeführt wird, wird das Computerprogramm veranlassen, dass die zweite Software-Anwendung auf einem anderen Rechner ausgeführt wird, etwa auf einer Cloud Plattform im Cloud-Netzwerk.

KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Einzelheiten und mögliche Einsatzgebiete der Erfindung zu entnehmen sind. Dabei zeigt

Fig. 1    eine schematische Darstellung des Funktionsprinzips das bestätigenden Lernens,
Fig. 2    ein vereinfachtes Modell des Internet of Things,
Fig. 3    eine Tabelle mit möglichen Kombinationen an Zuständen der Umgebung des Gateways,
Fig. 4    eine Tabelle mit Zuständen der Umgebung des Gateways und möglichen Aktionen des Gateways,
Fig. 5    eine Tabelle mit Clusterung der Daten aus Fig. 4,
Fig. 6    ein neuronales Netzwerk zum bestätigenden Lernen,
Fig. 7    eine mögliche Simplex Architektur für das bestätigende Lernen.

WEGE ZUR AUSFÜHRUNG DER ERFINDUNG

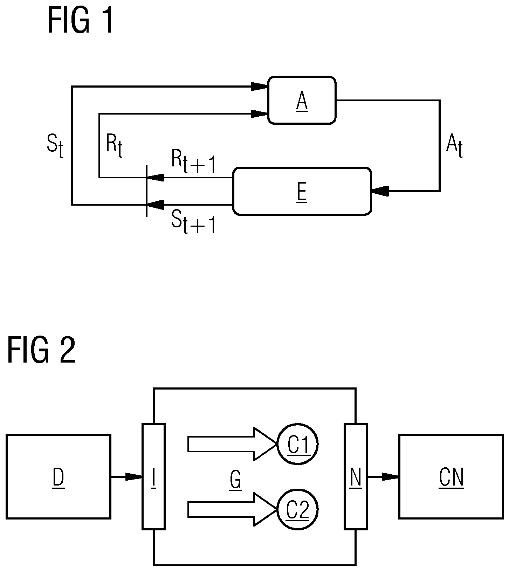

Fig. 1 zeigt das Funktionsprinzip von bestätigendem Lernen. Bestätigendes Lernen wird hier zum Steuern des Verhaltens der Geräte verwendet, die Teil eines lokalen Netzwerks sind und am Internet of Things teilnehmen. S bezeichnet ein Set von Zuständen der Umgebung E. A bezeichnet ein Set von Aktionen eines Agenten Ag. $Pa(S_t, S_t+1)$ bezeichnet die Wahrscheinlichkeit des Übergangs vom Zustand $S_t$ zum Zustand $S_{t+1}$ während der Agent Ag die Aktion $A_t$ ausübt. $R_{t+1}$ bezeichnet die unmittelbare Belohnung nach dem Übergang vom Zustand $S_t$ zum Zustand $S_{t+1}$ durch die Aktion $A_t$.

Das Gateway G stellt nun den Agenten A dar, der mit seiner Umgebung E interagiert. Die Umgebung E umfasst andere Geräte, die mit dem Gateway G verbunden sind und Daten in regelmäßigen oder unregelmäßigen Intervallen übersenden, die Netzwerk-Schnittstelle und die Konnektivität zu den Cloudbasierten Back-End-Diensten. Alle diese Faktoren bringen Unsicherheiten mit sich und stellen eine Herausforderung bezüglich der Bewältigung des Arbeitspensums und etwaiger Leistungseinschränkungen oder Ausfällen dar.

Das Set von Zuständen der Umgebung E umfasst beispielsweise

- den aktuellen Zustand des lokalen Netzwerks,
- die Rate an Daten, die von benachbarten Geräten des lokalen Netzwerks beim Gateway G ankommen,
- die Arten von Datenströmen die von benachbarten Geräten des lokalen Netzwerks beim Gateway G ankommen.
- Das Set von Zuständen der Umgebung E umfasst erfindungsgemäß Zustandsdaten des Agenten Ag, also des Gateways G, wie z.B. die momentane Auslastung der Ressourcen des Gateways G (CPU, Speicher, Warteschlange, etc.).

Das Set A von Aktionen des Agenten Ag, also des Gateways G, kann Folgendes umfassen:

- Empfange Daten von einem verbundenen Gerät
- Zur Warteschlagen hinzufügen
- Repriorisierung eines Elements in der Warteschlange
- Bearbeite eine Anfrage
- Komprimiere Daten
- Teile Daten auf
- Transformiere bestimmte Daten
- Lege Daten in einem Zwischenspeicher (engl. buffer) ab
- Übertrage Daten zu einem Back-End-Dienst

Die Belohnung wird auf Basis einer Minimierung bestimmter Maßzahlen (engl. metrics) definiert, wobei die Maßzahlen umfassen können

- die durchschnittliche Wartezeit bis zu einer Aktion des Gateways G
- die Länge der Warteschlange.
- Erfindungsgemäß umfassen die Maßzahlen zumindest die durchschnittliche Verlangsamung eines Arbeitsauftrags mit J = C/T, wobei C die Bearbeitungszeit des Arbeitsauftrags bedeutet (also die Zeit vom Eingang des Arbeitsauftrags bis zur Fertigstellung) und T die ideale Dauer des Arbeitsauftrags.

In Fig. 2 ist ein vereinfachtes Modell des Internet of Things dargestellt. Es ist nur ein Gerät D des lokalen Netzwerks dargestellt. Das Gerät D hat keine direkte Anbindung an das Cloud-Netzwerk CN, sondern es ist mit dem Gateway G verbunden und überträgt an dieses Datenströme über eine Eingangs-Schnittstelle I. Das Gateway G hat zwei Prozessoreinheiten C1, C2, die parallel arbeiten können. Das Gateway G ist über eine Ausgangs-Schnittstelle N mit dem Cloud-Netzwerk CN verbunden, z.B. mit einer bestimmten Cloud Plattform darin. Die Ausgangs-Schnittstelle N kann ein kabelloser Internet-Zugang sein und daher anfällig für Schwankungen in der Verbindungsqualität oder im Datendurchsatz. Die Cloud Plattform empfängt Datenströme vom Gateway G und führt weitere Aktionen damit durch, wie speichern, analysieren, visualisieren.

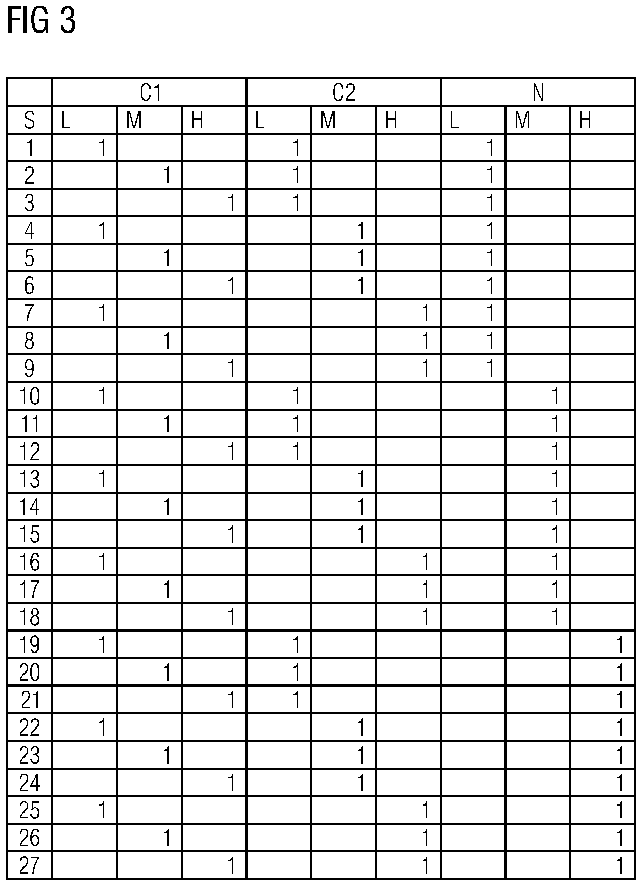

Konzentriert man sich nur auf die wesentlichen Komponenten Eingangs-Schnittstelle I und Prozessoreinheiten C1, C2, um das Arbeitspensum (engl. workload) und die Umgebung E des Gateways G zu modellieren, und verwendet man nur drei konkrete mögliche Zustände L-niedrig, M-mittel und H-hoch, dann gibt es für das Modell $3^3 = 27$ Zustände, die in der Tabelle von Fig. 3 dargestellt sind.

Der Boole'sche Wert 1 bedeutet, dass ein bestimmter Zustand vorliegt. Um nun alle möglichen Zustände zu behandeln, müssen Regeln aufgestellt werden. Starre Regeln können aber, je nach dem aktuellen Zustand der Umgebung E, auch nicht optimale oder unerwünschte Lösungen ergeben. Die vorliegende Erfindung sieht nun vor, dass bestimmte Aktionen vom aktuellen Zustand abgeleitet werden und das der Agent am Gateway G mit der Zeit autonom lernt, was die beste Aktion ist, indem eine Belohnung für die Aktionen gegeben wird.

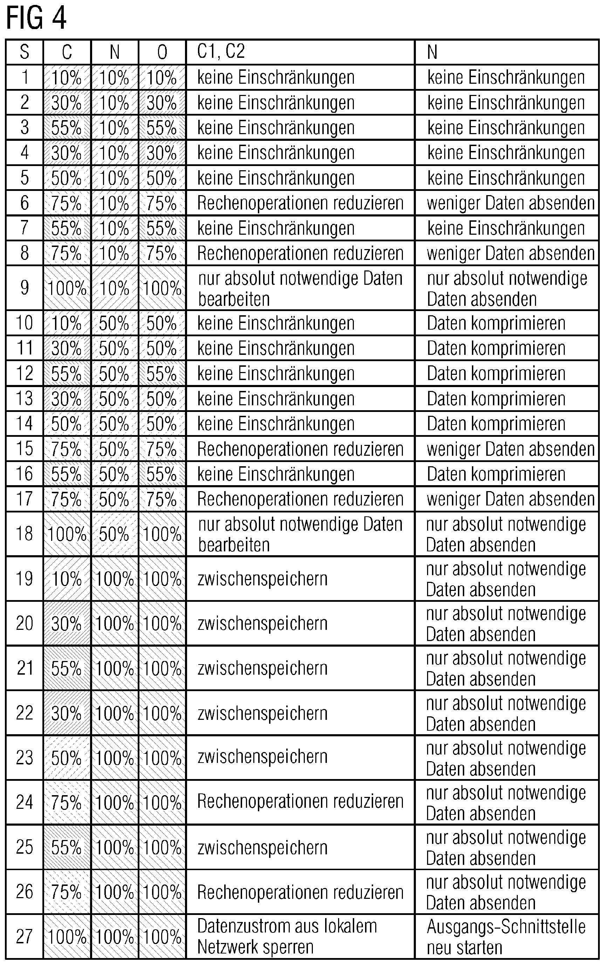

In der Tabelle von Fig. 4 ist ein praktisches Beispiel für Zustände und mögliche Aktionen dargestellt. Es wird eine Aggregation durchgeführt, um die Zustände des Geräts G und des lokalen Netzwerks besser erkennbar zu machen. Für die Prozessoreinheiten C1, C2 erfolgt die Aggregation zu C wie folgt:

$$C = 0,5* (Wert(C1,L)*0,1 + Wert(C1,M)*0,5 + Wert (C1, H)) +$$
$$0,5* (Wert(C2,L)*0,1 + Wert(C2,M)*0,5 + Wert (C2, H))$$

Die Funktion Wert(x,y) holt den Wert 0 oder 1 aus der entsprechenden Spalte aus der Tabelle der Fig. 3. Der Gesamtzustand C der Prozessoreinheiten C1, C2 ist eine gewichtete Summe der einzelnen Zustände. Die Gesamtbedingung N des Netzwerks der Ausgangs-Schnittstelle N, zu dem das Gateway G die Schnittstelle darstellt, wird auf ähnliche Weise basierend auf den möglichen Zuständen L-niedrig, M-mittel und H-hoch abgeleitet.

Der Gesamtzustand O des Gateways G wird abgeleitet wie folgt: O = MAX(C, N), es wird also das Maximum aus den Einträgen in Spalte C und Spalte N verwendet.

Die Tabelle in Fig. 4 zeigt exemplarisch, dass der Agent Ag, also das Gateway G, ausgehend von einem bestimmten Zustand S Aktionen A ableiten kann, welche die Rechenkapazität und die Datenübertragung zu den Back-End-Diensten berücksichtigt. Der Wert bzw. die Qualität dieser Aktion A kann über die Zeit über das Erhalten einer Belohnung erlernt werden. Als Aktionen sind in Fig. 4 für die Prozessoreinheiten C1, C2 (vorletzte Spalte) und für die Ausgangs-Schnittstelle N vorgesehen:

keine Einschränkungen (engl. no restrictions) zwischenspeichern (engl. perform caching) Daten komprimieren (engl. perform compression) Rechenoperationen reduzieren (engl. reduce operations) weniger Daten absenden (engl. reduce dispatching) Ausgangs-Schnittstelle neu starten (engl. reboot interface) nur absolut notwendige Daten bearbeiten/absenden (engl. only vital data)

Datenzustrom aus lokalem Netzwerk sperren (engl. stop inbound traffic)

Um die Qualität Q einer Kombination aus einem Zustand S und einer Aktion A zu bestimmen, wird sogenanntes Q-Lernen angewendet:

$Q(S_t, A_t)$ wird zugeordnet zu

$$(1-\alpha)Q(S_t, A_t) + \alpha(R_t + \gamma \max_a(Q(S_{t+1}, a)))$$

$Q(S_t, A_t)$ ist der alte (im Zeitpunkt t) Wert der Qualität für das Wertepaar $(S_t, A_t)$.
$\alpha$ ist die Lernrate mit $(0 < \alpha \leq 1)$.
$R_t$ ist die Belohnung, die für den aktuellen Zustand $S_t$ erhalten wird.
$\gamma$ ist ein Diskontierungsfaktor.
$\max_a(Q(S_{t+1}, a))$ ist Schätzwert eines optimalen zukünftigen (zum Zeitpunkt t+1) Werts der Qualität, wobei a ein Element von A ist, also eine einzelne Aktion aus einem Set von Aktionen A.

Es ergibt sich schließlich eine Q-Funktion $Q(S_t, A_t)$ in Abhängigkeit verschiedener Sets A,S von Zuständen und Aktionen.

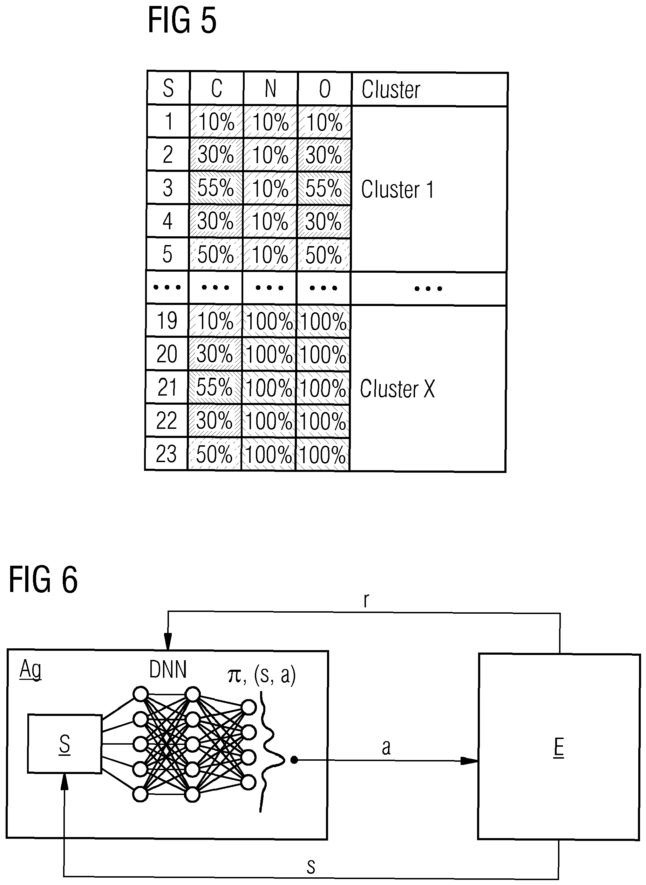

In Fig. 5 ist dargestellt, wie die Daten aus Fig. 4 gruppiert (clustert) werden können, etwa zum Berechnen des Schätzwerts eines optimalen zukünftigen Werts der Qualität. Als Methoden für das Clustering kann z.B. der k-Means-Algorithmus verwendet werden, oder hierarchische Clustermethoden. Die Bildung von Clustern, hier Cluster 1, ... bis Cluster X, kann z.B. anhand von ähnlichen Werten in der Spalte N, bzw. auch in den Spalten C und N, durchgeführt werden.

Die oben angeführte Qualität einer Kombination aus einem Set S von Zuständen und einem Set A von Aktionen müsste nun in Echtzeit durch das Gateway G berechnet werden, was mitunter schwierig ist aufgrund der limitierten Kapazität der Hardware des Gateways G, des aktuellen zu bewältigenden Arbeitspensums (workload) des Gateways G sowie der Anzahl der zu berücksichtigenden Zustände. Stattdessen kann eine Funktionsapproximierung durchgeführt werden, was in Fig. 6 anhand eines neuronalen Netzes dargestellt ist.

Ein sogenanntes Deep Neural Network DNN wird offline, also außerhalb des normalen Betriebs des Gateways G, trainiert und dann vom Agenten Ag, also vom Gateway G, im normalen Betrieb des Gateways G instanziiert, sodass das Deep Neural Network DNN basierend auf dem aktuellen Zustand s der Umgebung E eine Empfehlung für eine Aktion a trifft. Diese Methode ist viel schneller und verursacht weniger Rechenaufwand am Gateway G. Eine Empfehlung kann im Bereich von einigen Millisekunden erstellt werden.

Beim Trainieren des Deep Neural Network DNN, das offline erfolgt, also nicht im Betrieb des Agenten Ag als Gateway G, wählt der Agent Ag eine Aktion a basierend auf einer Zufallsverteilung $\pi$ aus, wobei $\pi$ eine Funktion einer Aktion a und eines Zustands s ist und für den Funktionswert gilt: ($0 < \pi(s; a) \leq 1$). Der Agent Ag übt diese Aktion a auf die Umgebung E aus. Dann wird vom Agenten Ag als Folge ein Status s der Umgebung E beobachtet, eingelesen und dem Deep Neural Network DNN übergeben. Die aus der Aktion a resultierende Belohnung r wird wieder dem Deep Neural Network DNN zugeführt, das schließlich mittels Rückwärtspropagierung (engl. back-propagation) lernt, welche Kombinationen von einem bestimmten Zustand s und einer bestimmten Aktion a eine größtmögliche Belohnung r ergeben. Das Lernergebnis resultiert in einer entsprechenden verbesserten Abschätzung der Qualität, also der Q-Funktion. Je länger der Agent Ag mit Hilfe der Umgebung E trainiert wird, desto besser nähert sich die abgeschätzte Q-Funktion durch die Rückwärtspropagierung der wahren Q-Funktion an.

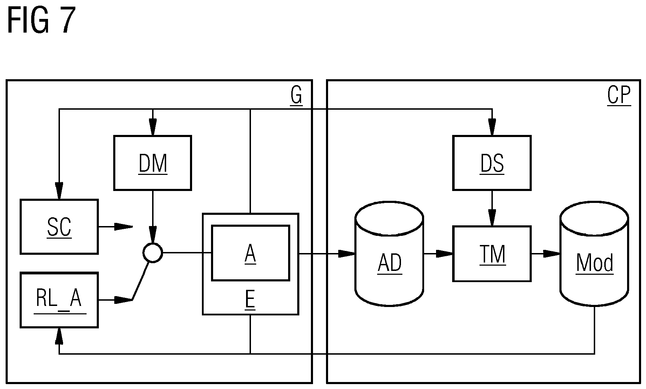

Eine mögliche Architektur für das bestätigende Lernen unter Verwendung von Deep Learning, somit ein Deep Reinforcement Learning, wird in Fig. 7 dargestellt. Dargestellt sind das Gateway G und eine Cloud Plattform CP des Cloud-Netzwerks CN (siehe Fig. 2). Dabei wird eine an sich bekannte sogenannte Simplex-Systemarchitektur verwendet, welche eine Standard-Steuerung (Standard Controller) SC enthält und eine fortgeschrittene Steuerung, die das bestätigende Lernen anwendet und daher als RL Agent RL_A bezeichnet wird. Die Standard-Steuerung SC bestimmt den Zeitpunkt des Absendens von Daten und führt das Absenden durch, jedoch ohne Optimierung. Der RL Agent RL_A wendet Verfahren zum Lernen an, wie eben das oben beschriebene bestätigende Lernen, um die Datenübertragung zu optimieren.

Zu Beginn arbeitet das Gateway G mit dem Standard Controller SC. In einer Cloud Plattform CP ist ein sogenannter Device Shadow DS des Gateways G vorgesehen, auf welchem das Modell, also etwa das Deep Neural Network DNN aus Fig. 6, mittels eines Trainingsmoduls TM trainiert wird. Dabei wird das Modell anhand von tatsächlichen Daten AD des Gateways G und anhand der tatsächlichen Konfiguration des Gateways G trainiert. Das trainierte Modell wird in einem Speicher für Modelle, hier mit Mod bezeichnet, abgelegt und der RL Agent RL_A wird über das Vorhandensein eines Modells informiert. Der RL Agent RL_A lädt das Modell aus dem Speicher Mod für Modelle und das Entscheidungsmodul DM des Gateways G hat die Möglichkeit, vom Standard Controller SC auf den RL Agent RL_A umzuschalten, um so das Verhalten des Gateways G bezüglich Datenübertragung zu verbessern.

Bezugszeichenliste:

| | |
|---|---|
| A | Set von Aktionen eines Agenten Ag |
| a | Aktion |
| AD | Daten des Gateways G |
| Ag | Agent |
| CN | Cloud-Netzwerk |
| CP | Cloud Plattform |
| D | Gerät des lokalen Netzwerks |
| DM | Entscheidungsmodul |
| DNN | Deep Neural Network |
| DS | Device Shadow |

| | |
|---|---|
| E | Umgebung (engl. environment) |
| G | Gateway |
| I | Eingangs-Schnittstelle |
| Mod | Speicher für Modelle |
| N | Ausgangs-Schnittstelle |
| r | Belohnung |
| RL_A | RL Agent |
| S | Set von Zuständen |
| s | Zustand |
| SC | Standard-Steuerung (Standard Controller) |
| TM | Trainingsmodul |

**Patentansprüche**

1. Verfahren zum Anpassen einer ersten Software-Anwendung, die auf einem Gateway (G) ausgeführt wird und die Datenübertragung des Gateways steuert, wobei das Gateway ein oder mehrere Geräte (D) eines lokalen Netzwerks mit einem Cloud-Netzwerk (CN) verbindet,

   - wobei mittels einer zweiten Software-Anwendung maschinelles Lernen auf Basis von zumindest einem Zustand (s, S) der Umgebung (E) des Gateways (G) sowie von zumindest einer möglichen Aktion (a, A) des Gateways (G) durchgeführt wird,
   - wobei das Ergebnis des maschinellen Lernens zumindest einen Qualitätswert einer Paarung aus Zustand (s, S) der Umgebung des Gateways und Aktion (a, A) des Gateways enthält, und
   - wobei die erste Software-Anwendung solche Aktionen (a, A) des Gateways ausführt, welche bei einem gegebenen Zustand (s, S) der Umgebung des Gateways einen höheren Qualitätswert haben als andere Aktionen, wobei die zweite Software-Anwendung ein Verfahren zum bestätigenden Lernen umfasst, und für jede Paarung aus Zustand (s) der Umgebung des Gateways und Aktion (a) des Gateways eine Rückmeldung in Form einer Belohnung (r) erfolgt, wobei die Belohnung auf Basis der Minimierung bestimmter Maßzahlen erfolgt und die Maßzahlen zumindest die durchschnittliche Verlangsamung eines Arbeitsauftrags relativ zu der idealen Dauer des Arbeitsauftrags umfassen und als Zustand der Umgebung (E) des Gateways (G) die momentane Auslastung der Ressourcen des Gateways herangezogen wird.

2. Verfahren nach Anspruch 1, **dadurch gekennzeichnet, dass** die zweite Software-Anwendung ein Verfahren zum Q-Lernen umfasst.

3. Verfahren nach Anspruch 2, **dadurch gekennzeichnet, dass** die Daten über den Zustand (s, S) der Umgebung des Gateways (G) vor dem bestätigenden Lernen zu Clustern zusammengefasst werden.

4. Verfahren nach Anspruch 2 oder 3, **dadurch gekennzeichnet, dass** das Q-Lernen mit Hilfe eines Modells erfolgt, welches auf einer Cloud Plattform (CP) im Cloud-Netzwerk (CN) mit den aktuellen Daten (AD) des Zustands (s, S) der Umgebung (E) des Gateways (G) trainiert wird, und ein trainiertes Modell dem Gateway bei Bedarf zur Verfügung gestellt wird.

5. Verfahren nach Anspruch 4, **dadurch gekennzeichnet, dass** das Modell ein neuronales Netzwerk umfasst.

6. Verfahren nach einem der Ansprüche 1 bis 5, **dadurch gekennzeichnet, dass** die erste Software-Anwendung eine erste Steuerung umfasst, welche das Ergebnis des maschinellen Lernens nicht berücksichtigt, sowie eine zweite Steuerung, welche das Ergebnis des maschinellen Lernens berücksichtigt, wobei die zweite Steuerung eingesetzt wird, sobald Qualitätswerte aus dem maschinellen Lernen vorliegen, insbesondere sobald ein trainiertes Modell nach Anspruch 4 vorliegt.

7. Computerprogrammprodukt, umfassend Befehle, die bei der Ausführung des Programms durch ein Gateway dieses veranlassen, alle Schritte des Verfahrens nach einem der Ansprüche 1 bis 6 auszuführen.

**EP 3 878 157 B1**

**Claims**

1.  Method for adapting a first software application that is executed in a gateway (G) and controls the data transmission of the gateway, said gateway connecting one or more devices (D) of a local network to a cloud network (CN),

    - wherein machine learning is carried out by means of a second software application on the basis of at least one state (s, S) of the environment (E) of the gateway (G) and also of at least one possible action (a, A) of the gateway (G),
    - wherein the result of the machine learning contains at least one quality value of a pairing of state (s, S) of the environment of the gateway and action (a, A) of the gateway, and
    - wherein the first software application carries out those actions (a, A) of the gateway that, for a given state (s, S) of the environment of the gateway, have a higher quality value than other actions, wherein the second software application comprises a method for confirmation learning, and for each pairing of state (s) of the environment of the gateway and action (a) of the gateway there is an acknowledgement in the form of a reward (r), wherein the reward takes place on the basis of the minimisation of specific metrics and the metrics at least comprise the average slowing down of a job relative to the ideal duration of the job and the load of the resources of the gateway at that particular moment is used as the state of the environment (E) of the gateway (G).

2.  Method according to claim 1, **characterised in that** the second software application comprises a method for Q learning.

3.  Method according to claim 2, **characterised in that** the data about the state (s, S) of the environment of the gateway (G) is grouped into clusters before the reinforcement learning.

4.  Method according to claim 2 or 3, **characterised in that** the Q learning is done with the aid of a model, which is trained on a cloud platform (CP) in the cloud network (CN) with the current data (AD) of the state (s, S) of the environment (E) of the gateway (G), and a trained model is made available to the gateway if required.

5.  Method according to claim 4, **characterised in that** the model comprises a neural network.

6.  Method according to one of claims 1 to 5, **characterised in that** the first software application comprises a first controller, which does not take account of the result of the machine learning, and also a second controller, which does take account of the result of the machine learning, wherein the second controller is employed as soon as quality values are available from the machine learning, in particular as soon as a trained model according to claim 4 is available.

7.  Computer program product, comprising instructions that, when the program is executed by a gateway, cause said gateway to carry out all steps of the method according to one of claims 1 to 6.

**Revendications**

1.  Procédé permettant d'adapter une première application logicielle exécutée sur une passerelle (G) et commandant le transfert de données de la passerelle, dans lequel la passerelle relie un ou plusieurs périphérique(s) (D) d'un réseau local à un réseau cloud (CN),

    - dans lequel un apprentissage automatique est mis en oeuvre au moyen d'une deuxième application logicielle en se basant sur au moins un état (s, S) de l'environnement (E) de la passerelle (G) ainsi que sur au moins une action possible (a, A) de la passerelle (G),
    - dans lequel le résultat de l'apprentissage automatique contient au moins une valeur de qualité d'un appariement entre l'état (s, S) de l'environnement de la passerelle et l'action (a, A) de la passerelle, et
    - dans lequel la première application logicielle exécute des actions (a, A) de la passerelle qui, pour un état donné (s, S) de l'environnement de la passerelle, présentent une valeur de qualité supérieure à celle d'autres actions,
    - dans lequel la deuxième application logicielle comprend un procédé permettant un apprentissage par renforcement, et un retour sous la forme d'une récompense (r) a lieu pour chaque appariement entre l'état (s) de l'environnement de la passerelle et l'action (a) de la passerelle,
    - dans lequel la récompense intervient en se basant sur la minimisation de certaines mesures et lesdites mesures comprennent au moins le ralentissement moyen d'un ordre de travail par rapport à la durée idéale dudit ordre de travail et l'utilisation instantanée des ressources de la passerelle est utilisée comme état de l'environnement (E) de la passerelle (G).

2. Procédé selon la revendication 1, **caractérisé en ce que** la deuxième application logicielle comprend un procédé faisant appel à une fonction Q d'apprentissage par renforcement.

3. Procédé selon la revendication 2, **caractérisé en ce que** les données sur l'état (s, S) de l'environnement de la passerelle (G) sont regroupées en agrégats avant l'apprentissage par renforcement.

4. Procédé selon la revendication 2 ou 3, **caractérisé en ce que** l'apprentissage par renforcement faisant appel à une fonction Q est mis en oeuvre à l'aide d'un modèle instruit sur une plate-forme cloud (CP) au sein du réseau cloud (CN) grâce aux données actuelles (AD) de l'état (s, S) de l'environnement (E) de la passerelle (G), et un modèle instruit est mis à la disposition de la passerelle si nécessaire.

5. Procédé selon la revendication 4, **caractérisé en ce que** le modèle comprend un réseau neuronal.

6. Procédé selon l'une quelconque des revendications 1 à 5, **caractérisé en ce que** la première application logicielle comprend un premier système de commande qui ne prend pas en compte le résultat de l'apprentissage automatique, et un deuxième système de commande qui prend en compte le résultat de l'apprentissage automatique, dans lequel le deuxième système de commande est utilisé dès que des valeurs de qualité issues de l'apprentissage automatique sont disponibles, en particulier dès qu'un modèle instruit selon la revendication 4 est disponible.

7. Produit-programme informatique comprenant des instructions qui, lors de l'exécution du programme par une passerelle, amènent ledit programme à mettre en oeuvre toutes les étapes du procédé selon l'une quelconque des revendications 1 à 6.

FIG 1

FIG 2

# FIG 3

| S | C1 | | | C2 | | | N | | |
|---|---|---|---|---|---|---|---|---|---|
| | L | M | H | L | M | H | L | M | H |
| 1 | 1 | | | 1 | | | 1 | | |
| 2 | | 1 | | 1 | | | 1 | | |
| 3 | | | 1 | 1 | | | 1 | | |
| 4 | 1 | | | | 1 | | 1 | | |
| 5 | | 1 | | | 1 | | 1 | | |
| 6 | | | 1 | | 1 | | 1 | | |
| 7 | 1 | | | | | 1 | 1 | | |
| 8 | | 1 | | | | 1 | 1 | | |
| 9 | | | 1 | | | 1 | 1 | | |
| 10 | 1 | | | 1 | | | | 1 | |
| 11 | | 1 | | 1 | | | | 1 | |
| 12 | | | 1 | 1 | | | | 1 | |
| 13 | 1 | | | | 1 | | | 1 | |
| 14 | | 1 | | | 1 | | | 1 | |
| 15 | | | 1 | | 1 | | | 1 | |
| 16 | 1 | | | | | 1 | | 1 | |
| 17 | | 1 | | | | 1 | | 1 | |
| 18 | | | 1 | | | 1 | | 1 | |
| 19 | 1 | | | 1 | | | | | 1 |
| 20 | | 1 | | 1 | | | | | 1 |
| 21 | | | 1 | 1 | | | | | 1 |
| 22 | 1 | | | | 1 | | | | 1 |
| 23 | | 1 | | | 1 | | | | 1 |
| 24 | | | 1 | | 1 | | | | 1 |
| 25 | 1 | | | | | 1 | | | 1 |
| 26 | | 1 | | | | 1 | | | 1 |
| 27 | | | 1 | | | 1 | | | 1 |

# FIG 4

| S | C | N | O | C1, C2 | N |
|---|---|---|---|--------|---|
| 1 | 10% | 10% | 10% | keine Einschränkungen | keine Einschränkungen |
| 2 | 30% | 10% | 30% | keine Einschränkungen | keine Einschränkungen |
| 3 | 55% | 10% | 55% | keine Einschränkungen | keine Einschränkungen |
| 4 | 30% | 10% | 30% | keine Einschränkungen | keine Einschränkungen |
| 5 | 50% | 10% | 50% | keine Einschränkungen | keine Einschränkungen |
| 6 | 75% | 10% | 75% | Rechenoperationen reduzieren | weniger Daten absenden |
| 7 | 55% | 10% | 55% | keine Einschränkungen | keine Einschränkungen |
| 8 | 75% | 10% | 75% | Rechenoperationen reduzieren | weniger Daten absenden |
| 9 | 100% | 10% | 100% | nur absolut notwendige Daten bearbeiten | nur absolut notwendige Daten absenden |
| 10 | 10% | 50% | 50% | keine Einschränkungen | Daten komprimieren |
| 11 | 30% | 50% | 50% | keine Einschränkungen | Daten komprimieren |
| 12 | 55% | 50% | 55% | keine Einschränkungen | Daten komprimieren |
| 13 | 30% | 50% | 50% | keine Einschränkungen | Daten komprimieren |
| 14 | 50% | 50% | 50% | keine Einschränkungen | Daten komprimieren |
| 15 | 75% | 50% | 75% | Rechenoperationen reduzieren | weniger Daten absenden |
| 16 | 55% | 50% | 55% | keine Einschränkungen | Daten komprimieren |
| 17 | 75% | 50% | 75% | Rechenoperationen reduzieren | weniger Daten absenden |
| 18 | 100% | 50% | 100% | nur absolut notwendige Daten bearbeiten | nur absolut notwendige Daten absenden |
| 19 | 10% | 100% | 100% | zwischenspeichern | nur absolut notwendige Daten absenden |
| 20 | 30% | 100% | 100% | zwischenspeichern | nur absolut notwendige Daten absenden |
| 21 | 55% | 100% | 100% | zwischenspeichern | nur absolut notwendige Daten absenden |
| 22 | 30% | 100% | 100% | zwischenspeichern | nur absolut notwendige Daten absenden |
| 23 | 50% | 100% | 100% | zwischenspeichern | nur absolut notwendige Daten absenden |
| 24 | 75% | 100% | 100% | Rechenoperationen reduzieren | nur absolut notwendige Daten absenden |
| 25 | 55% | 100% | 100% | zwischenspeichern | nur absolut notwendige Daten absenden |
| 26 | 75% | 100% | 100% | Rechenoperationen reduzieren | nur absolut notwendige Daten absenden |
| 27 | 100% | 100% | 100% | Datenzustrom aus lokalem Netzwerk sperren | Ausgangs-Schnittstelle neu starten |

FIG 5

| S | C | N | O | Cluster |
|---|---|---|---|---|
| 1 | 10% | 10% | 10% | |
| 2 | 30% | 10% | 30% | |
| 3 | 55% | 10% | 55% | Cluster 1 |
| 4 | 30% | 10% | 30% | |
| 5 | 50% | 10% | 50% | |
| ... | ... | ... | ... | ... |
| 19 | 10% | 100% | 100% | |
| 20 | 30% | 100% | 100% | |
| 21 | 55% | 100% | 100% | Cluster X |
| 22 | 30% | 100% | 100% | |
| 23 | 50% | 100% | 100% | |

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013122885 A1

**In der Beschreibung aufgeführte Nicht-Patentliteratur**

- Deep Reinforcement Learning for Time Scheduling in RF-Powered Backscatter Cognitive Radio Networks. **TRAN THE ANH et al.** ARXIV.ORG. CORNELL UNIVERSITY LIBRARY, 201 OLIN LIBRARY CORNELL UNIVERSITY ITHACA, 03. Oktober 2018